# EUROPÄISCHE PATENTSCHRIFT

(11) **EP 2 565 482 B1**
(45) Veröffentlichungstag und Bekanntmachung des Hinweises auf die Patenterteilung: **23.07.2014**
(21) Anmeldenummer: 12182675.4
(22) Anmeldetag: 31.08.2012
(51) Int. Cl.: F16D 7/04

(54) **Vorrichtung zur Übertragung von Drehmoment**
Device for transmitting torque
Dispositif de transmission de couple

(30) Priorität: 31.08.2011 DE 102011053165
(43) Veröffentlichungstag der Anmeldung: 06.03.2013
(73) Patentinhaber: Gealan Formteile GmbH, 95145 Oberkotzau (DE)
(72) Erfinder: Saunus, Christian, 08223 Grünbach (DE); Schaller, Stefan, 95111 Rehau (DE); Buheitel, Christian, 95111 Rehau (DE)
(74) Vertreter: Fleuchaus, Michael A.

(56) Entgegenhaltungen:
- WO-A1-2009/148201
- BE-A- 376 381
- DE-A1- 4 404 866
- DE-U1-202008 009 932
- GB-A- 2 022 199
- US-A- 1 953 430
- US-A- 3 226 999

## Beschreibung

Die vorliegende Erfindung betrifft eine Vorrichtung zur Übertragung von Drehmoment. Insbesondere betrifft die vorliegende Erfindung eine Vorrichtung zur Übertragung von Drehmoment, die zur Aufnahme und Abgabe von Drehspannungen eingerichtet ist.

Vorrichtungen zur Übertragung von Drehmoment sind im Stand der Technik hinlänglich bekannt. Die einfachste Form einer Vorrichtung zur Übertragung von Drehmoment ist eine starre Achse. Starre Achsen haben den Nachteil, dass sie, insbesondere bei der Verwendung von Kunststoffen als Achsmaterial, beim Einsatz größerer Drehmomente aufgrund von innerhalb des Achsmaterials auftretenden Torsionsspannungen plastisch verformt und damit dauerhaft beschädigt werden können.

Beispielsweise besteht im KFZ-Klimaanlagenbau bei der hintereinander liegenden Anordnung von zwei Luftsteuerungsklappen auf einer Achse die Notwendigkeit, ein sicheres Schließen beider Klappen zu gewährleisten, selbst dann, wenn lediglich ein einseitiger Antrieb der die beiden Klappen tragenden Achse vorgesehen wird. Hierzu ist es erforderlich, dass beide Klappen mit einem vorgegebenen Schließmoment an den Anschlag gefahren werden. Aufgrund der spezifischen Materialeigenschaften des die Achse bildenden Kunststoffes, welcher üblicherweise aus der Klasse der Thermoplasten ausgewählt ist, kann es dabei neben den innerhalb einer Klimaanlage ohnehin auftretenden thermischen Belastungen zu starken Torsionsspannungen insbesondere in dem Achsbereich zwischen den beiden auf der Achse angeordneten Klappen kommen, was mitunter zu plastischen Verformungen der Achse in Form einer "Verdrehung" führt. Ein sicheres Schließen beider Luftsteuerungsklappen kann hiernach nichtmehr gewährleistet werden.

Auch in anderen Bereichen der Technik besteht das Problem, dass bei der Übertragung verhältnismäßig hoher Drehmomente eine Verwendung einfacher Materialien zur Herstellung der Achse ausscheidet, da diese aufgrund von Torsionsspannungsspitzen bei der Drehmomentübertragung dauerhaft beschädigt werden könnten.

Die US 1,953,430 A sowie die DE 20 2008 009 932 U1 offenbaren jeweils einen Überlastschutz für Drehmomentübertragungsvorrichtungen. WO 2009/148 201 A1 offenbart einen Drehmomentbegrenzer.

Aufgabe der vorliegenden Erfindung ist es daher, eine Vorrichtung zur Übertragung von Drehmoment zur Verfügung zu stellen, welche die bekannten Probleme des Standes der Technik überwindet und insbesondere die dauerhafte Beschädigung von Achsen durch Torsionsspannungen vermeidet. Darüber hinaus ist es Aufgabe der vorliegenden Erfindung, eine Vorrichtung zur Übertragung von Drehmoment zur Verfügung zu stellen, die einen vereinfachten und unter günstigen Bedingungen herzustellenden aber dennoch betriebssicheren Aufbau aufweist

Diese und weitere Aufgaben werden durch eine Vorrichtung zur Übertragung von Drehmoment gemäß Anspruch 1 gelöst. Ausführungsformen der Erfindung sind Gegenstand der abhängigen Ansprüche.

Danach weist eine Vorrichtung zur Übertragung von Drehmoment ein erstes, antriebsseitiges Kupplungselement und ein zweites, abtriebsseitiges Kupplungselement auf, wobei das erste und das zweite Kupplungselement um eine gemeinsame Rotationsachse drehbar gelagert sind, jedoch voneinander getrennt Rotationen ausführen können. Zudem weist die Vorrichtung zudem wenigstens ein Kopplungselement auf, welches in Rotationsrichtung des Antriebsseitigen Kupplungselements ortsfest mit diesem verbunden ist und in bezüglich der gemeinsamen Rotationsachse im Wesentlichen radialer Richtung gegen eine Rückstellkraft beweglich gelagert ist. Korrespondierend mit dem wenigstens einen Kopplungselement ist wenigstens ein Umfangsflächenabschnitt am Umfang des zweiten Kupplungselementes angeordnet, welcher in Form einer Ausnehmung am Umfang des zweiten Kupplungselementes mit zumindest teilweise konkavem Oberflächenverlauf ausgeführt ist. Das wenigstens eine Kopplungselement steht in einem Kontaktbereich mit dem jeweils korrespondierenden Umfangsflächenabschnitt in einer kraftschlüssigen Verbindung, wobei die den Kraftschluss erzeugende Kraft ebenso wie die Rückstellkraft in einer im Wesentlichen radialen Richtung wirkt.

Erfindungsgemäß weist der konkave Oberflächenverlauf des wenigstens einen Umfangsflächenabschnitts, vorzugsweise randseitig, weinigstens einen Bereich stärkerer Krümmung auf, wobei Übergänge zwischen Bereichen unterschiedlicher Krümmungen vorzugsweise klothoidenförmig ausgebildet sind.

Die erfindungsgemäß ausgeführte Vorrichtung zur Übertragung von Drehmoment ist dazu geeignet, ein Drehmoment, welches auf das antriebsseitige Kupplungselement wirkt und nicht lastfrei auf den Abtrieb übertragen werden kann, aufzunehmen und hierdurch eine Drehspannung aufzubauen, die für den Fall eines Lastabfalls wieder an das System abgegeben wird. Der Aufbau der Drehspannung erfolgt dabei durch ein mit steigender abtriebsseitiger Last zunehmendes Auflaufen des Kopplungselementes auf die konkav gekrümmte Fläche des Umfangsflächenabschnittes unter gleichzeitiger Radialverschiebung des Kopplungselementes gegen die Rückstellkraft. Hierbei baut sich außerdem eine Winkeldifferenz zwischen dem ersten Kupplungselement und dem zweiten Kupplungselement auf. Vermittels der Rückstellkraft übt das Kopplungselement eine in Umfangsrichtung bzw. Rotationsrichtung wirkende Kraft, also ein Drehmoment auf das zweite Kupplungselement aus, welches bei einer Entlastung des Abtriebs zu einer Nachstellung des zweiten Kupplungselements bezüglich des ersten Kupplungselements führt und damit zur Wiederherstellung des Gleichlaufs.

Die erfindungsgemäße Vorrichtung zur Übertragung von Drehmoment ist somit dazu geeignet, in Anwendungsfällen, in denen Achsabschnitte dem Risiko von Beschädigungen durch Torsionsspannungen ausgesetzt sind, solche Beschädigungen zu vermeiden durch die Unterbrechung der Achse und gleichzeitiger Einschaltung eines Drehspannungen aufnehmenden und abgebenden Elements. Dabei zeichnet sich die erfindungsgemäße Vorrichtung durch ihren einfachen Aufbau und ihre gleichzeitige Betriebssicherheit aus. Es ist ein Vorteil der erfindungsgemäßen Vorrichtung, dass diese im lastfreien Zustand stets selbsttätig in einen im Wesentlichen kräftefreien Zustand zurück kehrt und somit keine dauerhaften mechanischen Spannungen im System vorliegen, insbesondere nicht in Rotationsrichtung des ersten und zweiten Kupplungselements. Erstes und zweites Kupplungselement befinden sich im kräftefreien Zustand daher im Gleichlauf. Insbesondere im Falle der Verwendung von Kunststoffen zur Herstellung von erfindungsgemäßen Vorrichtungen ist ein kräftefreies System aufgrund von Kriechverformungen des Materials von erheblicher Bedeutung.

Im Rahmen der vorliegenden Beschreibung der Erfindung sind unter konkav gekrümmten Flächen solche Flächen zu verstehen, welche zumindest einen Krümmungsradius aufweisen, jedoch auch eine Vielzahl verschiedener Krümmungsradien aufweisen können. Unter konkav im erfindungsgemäßen Sinne ist außerdem einerseits auch strenge Konkavität zu verstehen sowie andererseits eine extrem geringe Konkavität nahezu bis hin zur Linearität, also sehr großen Krümmungsradien.

Durch die erfindungsgemäße Anordnung von Bereichen stärkerer Krümmung am Umfangsflächenabschnitt kann in Verbindung mit der Rückstellkraft eine exakte Einstellung des Nachstellmomentes erfolgen, und insbesondere eine winkeldifferenzabhängige Abhängigkeit des Nachstellmomentes hervorgerufen werden. Beispielsweise kann aufgrund einer geringen Krümmung des konkaven Bereichs in der Nähe der Ruheposition des Kopplungselements das Auftreten geringer Lasten am System zunächst zu einer größeren Winkeldifferenz jedoch einem relativ geringen Nachstellmoment führen, wohingegen hiernach, beim Auftreten größerer Lasten aufgrund der in Rotationsrichtung zum vorderen Randbereich hin stärker gekrümmten Fläche des Umfangsflächenabschnitts bei geringeren Winkeldifferenzen größere Nachstellmomente erzeugt werden. Somit kann das System allein durch die gezielte Wahl und Anordnung der Krümmungsradien des konkaven Bereichs und deren Lagen hinsichtlich seines Antwortverhaltens auf auftretende Lasten erheblich auf den jeweiligen Anwendungsfall angepasst werden.

Durch den klothoidenförmigen Verlauf zwischen Bereichen unterschiedlicher Krümmungen wird ein besonders gleichmäßiges und reproduzierbares auf- und ablaufen des Kopplungselements bzw. des Kontaktbereichs auf die gekrümmten Flächen des konkaven Bereichs des wenigstens einen Umfangsflächenabschnitts gewährleistet.

Bei einer bevorzugten Ausführungsform der erfindungsgemäßen Vorrichtung ist der wenigstens eine Umfangsflächenabschnitt an einem Außenumfang des zweiten Kupplungselements vorgesehen und die Rückstellkraft bezüglich der Rotationsachse im Wesentlichen radial nach innen gerichtet. Vorzugsweise ist hierbei der wenigstens eine Umfangsflächenabschnitt bezüglich des Kopplungselements radial innenliegend angeordnet. Bei einer alternativen, ebenso bevorzugten Ausführungsform der erfindungsgemäßen Vorrichtung ist der wenigstens eine Umfangsflächenabschnitt an einem Innenumfang des zweiten Kupplungselements vorgesehen und die Rückstellkraft ist bezüglich der Rotationsachse im Wesentlichen radial nach außen gerichtet. Vorzugsweise ist hierbei der wenigstens eine Umfangsflächenabschnitt bezüglich des Kopplungselements radial außenliegend angeordnet.

Bevorzugt ist das wenigstens eine Kopplungselement im Bereich des Kontaktbereichs mit dem jeweiligen Umfangsflächenabschnitt konvex ausgeführt und weist vorzugweise eine Krümmung auf, die stärker ist, als die Krümmung des korrespondierenden Umfangsflächenabschnitts. Eine derartige Ausführung des Kopplungselementes erlaubt es, dass dieses, wenn die Vorrichtung unter Last gerät gleichmäßig auf die gekrümmte Fläche des konkaven Bereichs des Umfangsflächenabschnitts aufläuft und hiervon, bei Lastabbau, ähnlich wie von einer schiefen Ebene wieder abläuft, wodurch ein Drehmoment auf das zweite Kupplungselement ausgeübt wird und hierdurch das zweite Kupplungselement gegenüber dem ersten Kupplungselement nachgestellt wird.

Bei einer Weiterbildung dieser Ausführungsform kann der Bereich des Kopplungselements auch in Form einer gelagerten Walze oder aber durch ein entsprechend geformtes Gleitelement ausgeführt sein, wodurch eine weitere Verringerung der Reibung zwischen Kopplungselement und Umfangsflächenabschnitte erzielbar ist.

Der Kontaktbereich ist somit vorzugsweise entgegen einer Gleit- oder Rollreibung entlang des konkaven Oberflächenverlaufs des Umfangsflächenabschnitts verschiebbar, da im Falle einer Last eine relative Drehung zwischen erstem und zweitem Kupplungselement erfolgt, also eine Winkeldifferenz, wodurch auch eine Verschiebung des Kopplungselements bzw. des Kontaktbereichs entlang des konkaven Oberflächenverlaufs des Umfangsflächenabschnitts hervorgerufen wird. Vermittels der Rückstellkraft führt dies auch zum Aufbau eines winkeldifferenzabhängigen Drehmoments auf das zweite Kupplungselement, so dass dieses bezüglich des ersten Kupplungselements im Falle eines Lastabbaus nachgeführt wird, bis wieder ein kräfte- bzw. drehspannungsfreier Zustand des Systems und damit Gleichlauf erreicht ist.

Besonders bevorzugt wird die kraftschlüssige Verbindung und die Rückstellkraft durch wenigstens ein auf das Kopplungselement wirkendes Federelement aufgebaut und gehalten bzw. gebildet, wobei das Federelement aus einer Gruppe ausgewählt ist, die Druck- oder Zugfederelemente, insbesondere elastische Kissen oder Bänder, Polymerkissen oder -bänder, Spiralfedern, Blattfedern, elastische Hebelarme, sämtlich aus Kunststoff oder Metall bestehend, Luftfederelemente sowie Kombinationen hiervon enthält. Je nach Anwendungsfall kann es aufgrund der individuellen Parameter des Systems möglich sein, polymerfedern, -kissen und/oder Bänder als Federelemente zu verwenden, was eine Vielzahl von Möglichkeiten für eine einfache und günstige Herstellung von erfindungsgemäßen Vorrichtungen erlaubt, beispielsweise durch die Nutzung von Mehrkomponentenspritzgussverfahren.

Bei einer besonders bevorzugten Ausführungsform der Erfindung ist das Kopplungselement an wenigstens einem Hebel angeordnet, wobei das Hebellager am ersten Kupplungselement um einen vorgegebenen ersten Winkel in Rotationsrichtung bezüglich der Wirkungslinie der Rückstellkraft versetzt angeordnet ist und/oder das Federelement an einem Punkt auf den Hebel wirkt der um einen vorgegebenen zweiten Winkel in Rotationsrichtung bezüglich der Wirkungslinie der Rückstellkraft versetzt ist. Bei dieser Ausführungsform erfolgt durch die Anwendung eines Hebels eine Übersetzung der durch das Federelement erzeugten Kraft, insbesondere der Rückstellkraft und der Kraft für die Herstellung des Kraftschlusses auf das Kopplungselement. Dies erlaubt beispielsweise die Verwendung verhältnismäßig klein dimensionierter Federelemente und dennoch die Herstellung einer ausreichend hohen Rückstellkraft auf das Kopplungselement.

Bei einer besonders bevorzugten Ausführungsform der Erfindung sind zwei Hebel und/oder Kopplungselemente und, hierzu korrespondierend, zwei Umfangsflächenabschnitte am zweiten Kupplungselement vorgesehen, wobei vorzugsweise der erste Hebel bzw. das erste Kopplungselement und der hierzu korrespondierende erste Umfangflächenabschnitt und der zweite Hebel bzw. das zweite Kopplungselement und der hierzu korrespondierende zweite Umfangflächenabschnitt im Wesentlichen symmetrisch bezüglich der Rotationsachse oder einer Ebene angeordnet sind. Bevorzugt ist die Ebene so orientiert, dass in ihr die Rotationsachse liegt und sie im wesentlichen normal zur Wirkungsrichtung der Rückstellkraft ist. Bei einer Weiterbildung sind erster und zweiter Hebel auf einem, vorzugsweise in der Symmetrieebene liegenden Hebellager gelagert.

Bei einer Weiterbildung ist zudem der Oberflächenverlauf des ersten Umfangsflächenabschnitts und der Oberflächenverlauf des zweiten Umfangsflächenabschnitts ebenfalls bezüglich einer Ebene in welcher die Rotationsachse liegt im Wesentlichen symmetrisch. Auf diese weise ist gewährleistet, dass eine symmetrische Verwendung der erfindungsgemäßen Vorrichtung für Rotationen bzw. Drehmomentübertragungen, auch unter Last, in beide Rotationsrichtungen möglich ist und Drehspannungen in beiden Richtungen aufgenommen und abgegeben werden können. Bei einer bevorzugten Ausführungsform mit, vorzugsweise symmetrisch angeordneten, Hebeln sind diese durch das Federelement gegeneinander verspannt, wobei, je nach Ausführungsform zwischen den Hebeln eine Zug- oder eine Druckspannung durch das Federelement aufgebaut wird.

Die erfindungsgemäße Vorrichtung wird bevorzugt verwendet, indem das erste Kupplungselement und/oder das zweite Kupplungselement mit einer Antriebsachse bzw. einer Abtriebsachse im Wesentlichen drehfest verbunden wird, wobei die Art der Verbindung aus einer Gruppe ausgewählt ist, die stoffschlüssige Verbindungen, insbesondere eine einstückige Ausführung von erstem Kupplungselement und Antriebsachse bzw. zweitem Kupplungselement und Abtriebsachse, kraft- und/oder formschlüssige Verbindungen, insbesondere Steckverbindungen, Klemmverbindungen, Schnappverbindungen, sämtliche vorzugsweise lösbar, enthält. Lösbare Verbindungen haben dabei den Vorteil, dass die erfindungsgemäße Vorrichtung beispielsweise zu Wartungszwecken einfach ersetzt werden kann.

Bei einer bevorzugten Ausführungsform sind erstes Kupplungselement, Kopplungselement, Hebel und/oder Federelement einstückig miteinander verbunden. Eine derartige Ausführung der erfindungsgemäßen Vorrichtung eignet sich besonders für die Herstellung aus Kunststoff mittels Kunststoffspritzguss, wobei hierbei verschiedene Elemente aus unterschiedlichen Kunststoffarten und in unterschiedlichen Spritzgängen hergestellt sein können. Gleichermaßen kann bei der Herstellung mittels Kunststoffspritzguss auch die Kombination mit metallischen Komponenten durch das Verfahren des Insert-Moldings angestrebt werden, beispielsweise für das Federelement und/oder den Bereich des Kopplungselements im Kontaktbereich, wie vorstehend beschrieben.

Weitere Merkmale der Erfindung ergeben sich aus der nachfolgenden detaillierten Beschreibung der Erfindung unter Bezugnahme auf die Figuren. Es zeigt:
- Fig. 1: schematische Ansichten einer ersten Ausführungsform der vorliegenden Erfindung gemäß einer offenen Variante;
- Fig. 2: schematische Ansichten einer zweiten Ausführungsform der vorliegenden Erfindung gemäß einer weiteren offenen Variante;
- Fig. 3: schematische Ansichten einer dritten Ausführungsform der vorliegenden Erfindung gemäß einer geschlossenen Variante;
- Fig. 4: schematische Ansichten einer vierten Ausführungsform der vorliegenden Erfindung gemäß einer weiteren geschlossenen Variante;
- Fig. 5: schematische Ansichten einer fünften Ausführungsform der vorliegenden Erfindung gemäß einer weiteren offenen Variante;
- Fig. 6: schematische Ansichten einer sechsten Ausführungsform der vorliegenden Erfindung gemäß einer weiteren geschlossenen Variante;
- Fig. 7: schematische Ansichten einer siebten Ausführungsform der vorliegenden Erfindung gemäß einer weiteren offenen Variante;
- Fig. 8: schematische Ansichten einer achten Ausführungsform der vorliegenden Erfindung gemäß einer weiteren geschlossenen Variante;
- Fig. 9: schematische Ansichten des Wirkungsprinzips des Drehspannungsaufbaus gemäß der vorliegenden Erfindung.

Die nachfolgende Beschreibung verschiedener Ausführungsformen der Erfindung ist lediglich beispielhafter Natur und dient insbesondere der Erläuterung der wesentlichen Merkmale der Erfindung anhand verschiedener Anwendungsbeispiele. Im Rahmen der Beschreibung verschiedener Ausführungsbeispiele sind gleiche Komponenten oder Komponenten mit entsprechenden Funktionen durch jeweils gleiche Bezugszeichen gekennzeichnet.

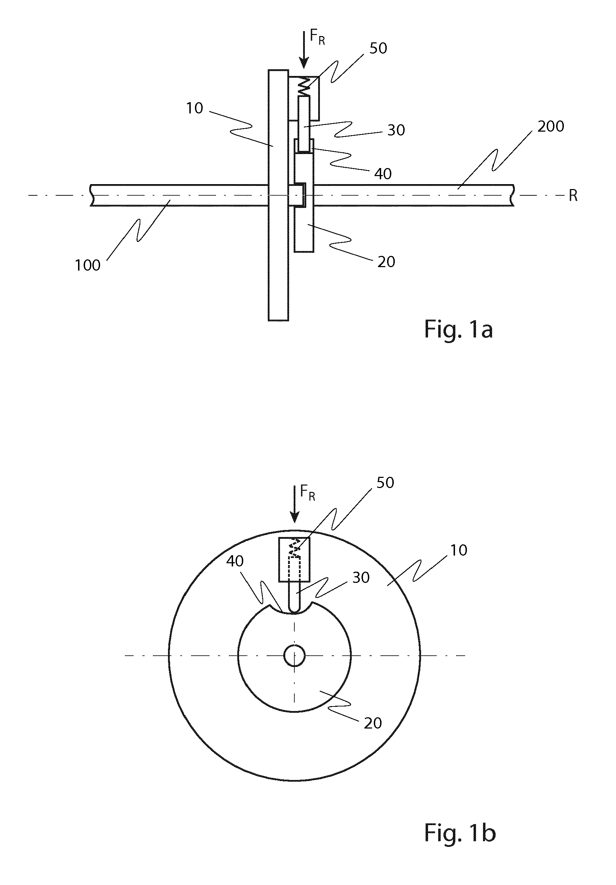

Fig. 1 zeigt schematisch den Aufbau einer ersten, offenen Ausführungsform der Erfindung, wobei Fig. 1a eine schematische Schnittansicht und Fig. 1b eine schematische Draufsicht auf die erfindungsgemäße Vorrichtung in Richtung der Rotationsachse R zeigt. In Fig. 1a ist erkennbar, dass ein erstes, antriebsseitiges Kupplungselement 10 mit einer Antriebsachse 100 verbunden ist und ein zweites, abtriebsseitiges Kupplungselement 20 mit einer Abtriebsachse 200. Erstes Kupplungselement 10 und zweites Kupplungselement 20 sind dabei um die Rotationsachse R drehbar gelagert, jedoch getrennt voneinander, so dass zumindest geringfügige Verdrehungen der beiden Kupplungselemente zueinander möglich sind. In Fig. 1a ist zudem erkennbar, dass bevorzugt das zweite Kupplungselement 20 drehbar am ersten Kupplungselement 10 gelagert ist, beispielsweise vermittels eines Lagerzapfens, so dass erstes und zweites Kupplungselement 10, 20 zueinander zentriert gehalten sind.

Das erste Kupplungselement 10 weißt eine Halterungs- und Führungseinrichtung auf, mit der ein Kopplungselement 30 in Umfangsrichtung ortsfest an dieser gehalten ist, wobei das Kopplungselement 30 jedoch in bezüglich der Rotationsachse R radialer Richtung verschiebbar ist und zwar gegen eine Rückstellkraft F_{R}, welche ebenfalls im wesentlichen in radialer Richtung wirkt. Unter im wesentlichen in radialer Richtung bezüglich einer Bewegung oder Wirkungsrichtung ist im Rahmen der vorliegenden Beschreibung zu verstehen, dass die Bewegung oder Wirkungsrichtung gegebenenfalls geringfügig von der exakt radialen Richtung abweichen kann und insbesondere auch geringfügig gekrümmt sein kann.

Die Rückstellkraft wird durch ein Federelement 50 erzeugt, welches auf das Kopplungselement 30 wirkt. Zusätzlich zur Rückstellkraft übt das Federelement 50 außerdem eine Kraft auf das Kopplungselement 30 aus, mit der dieses radial nach innen, also zur Rotationsachse hin weisend gegen das zweite Kupplungselement 20 gedrückt wird, und zwar in einem Umfangsflächenabschnitt 40 der, wie aus Fig. 1b ersichtlich ist, als konkave Ausnehmung des Außenumfangs des zweiten Kupplungselements 20 ausgebildet ist. Wie ebenfalls aus Fig. 1b ersichtlich ist weist das Kopplungselement 30 im Bereich des Kontaktbereichs mit dem zweiten Kupplungselement 20 eine abgerundete Spitze auf, welche eine stärkere Krümmung aufweist, als eine Krümmung des konkaven Bereichs des Umfangsflächenabschnitts 40.

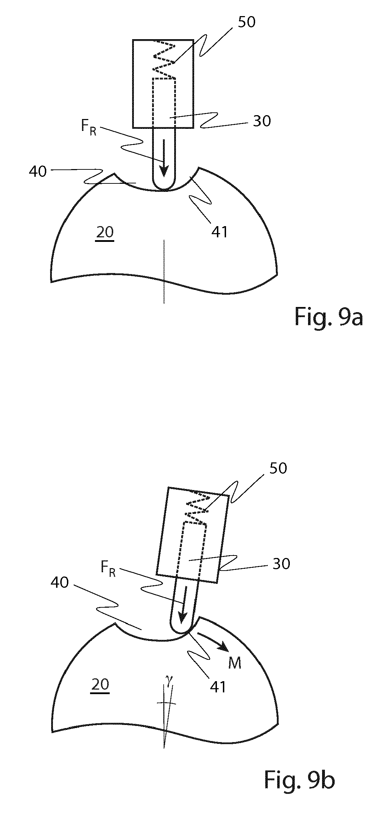

In Fig. 1b ist, wie auch in Fig. 9a erkennbar, dass der konkave Oberflächenverlauf des Umfangsflächenabschnitts 40 asymmetrisch ist, also zu einem Rand hin (vorliegend der rechte Randbereich) mit einer stärkeren Krümmung 41 ausgeführt ist, als zum anderen.

Bei einer Rotation des ersten Kupplungselements 10 im Uhrzeigersinn wird durch die kraftschlüssige Verbindung des Kopplungselements 30 mit dem zweiten Kupplungselement 20 im lastfreien Zustand, also wenn kein entgegen der Rotation wirkendes Drehmoment am zweiten Kupplungselement 20 wirkt, dieses mitgenommen und führt somit eine der Rotation des ersten Kupplungselements 10 entsprechende Rotation aus. Erstes Kupplungselement 10 und zweites Kupplungselement 20 befinden sich hierbei im Gleichlauf (vgl. auch Fig. 9a).

In diesem Zustand, also dem lastfreien Zustand, ist außerdem anzumerken, dass durch die auf das Kopplungselement 30 wirkende Rückstellkraft F_{R} und den hierdurch entstehenden Kraftschluss zwischen Kopplungselement und konkavem Umfangsflächenabschnitt 40 letzterer sich in seiner Lage zum Kopplungselement 30 so (und so lange) selbst ausrichtet, bis das Kopplungselement 30 maximal in Richtung der Rotationsachse R hin verschoben ist. Das Kopplungselement und der Umfangsflächenabschnitt 40 haben ihren Kontaktbereich in diesem Fall somit im Minimum oder nahe des Minimums des konkaven Bereiches des Umfangsflächenabschnittes 40.

Unter Bezugnahme auf Fig. 9b sei nun der Zustand erläutert, bei dem auf das zweite Kupplungselement 20 ein verzögerndes Drehmoment (also eine Last) wirkt, wodurch es zu einem Vorauseilen des ersten Kupplungselementes 10 bezüglich des zweiten Kupplungselementes 20 um eine Winkeldifferenz γ kommt. Hierdurch kommt es zu einer Verschiebung des Kontaktbereichs zwischen Kopplungselement 30 und zweitem Kupplungselement 20 entlang des konkaven Oberflächenverlaufs des Umfangsflächenabschnitts 40, wobei das Kopplungselement 30 gegen die Rückstellkraft F_{R} radial nach außen verschoben wird, da dieses auf die konkave Oberfläche des Umfangsflächenbereichs 40 aufläuft. Vermittels der Rückstellkraft F_{R} entsteht in diesem Zustand, ähnlich wie im Falle einer schiefen Ebene, eine tangentiale Kraftkomponente auf den konkaven Oberflächenbereich des Umfangsflächenabschnitts 40, welche in einem Drehmoment M auf das zweite Kupplungselement 20 resultiert. Für den Fall eines Lastabbaus, also dem verschwinden des verzögernden Drehmoments, was gleichermaßen durch eine Rückrotation entgegen dem Uhrzeigersinn in Fig. 9b erfolgen könnte, führt das Drehmoment M das zweite Kupplungselement 20 bezüglich des ersten Kupplungselements 10 nach, so dass wieder Gleichlauf zwischen den Kupplungselementen 10, 20 besteht.

Die erfindungsgemäße Vorrichtung zur Übertragung von Drehmoment nimmt also für den Fall von Verzögerungsdrehmomenten (Lasten) Drehspannungen auf und kann diese wieder an das System abgeben, wenn die verzögernden Drehmomente zurück gehen. Auf diese Weise kann eine Rotationsachse durch die erfindungsgemäße Vorrichtung zur Übertragung von Drehmoment wirksam vor exzessiven Torsionsspannungen und hieraus resultierenden Beschädigungen geschützt werden.

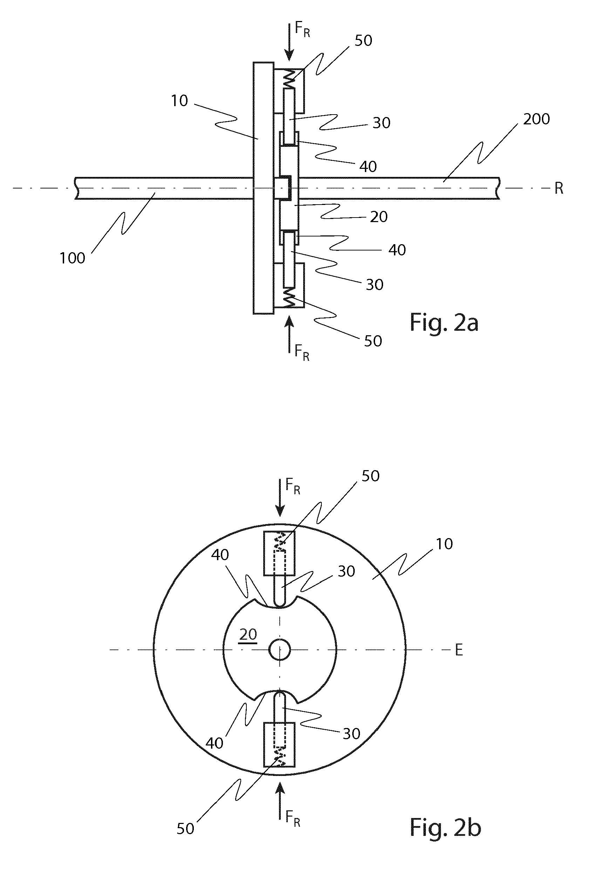

Fig. 2 zeigt schematisch den Aufbau einer zweiten, offenen Ausführungsform der Erfindung, wobei Fig. 2a eine schematische Schnittansicht und Fig. 2b eine schematische Draufsicht auf die erfindungsgemäße Vorrichtung in Richtung der Rotationsachse R zeigt. Die in Fig. 2 gezeigte Vorrichtung ist der ersten Ausführungsform gemäß Fig. 1 grundsätzlich ähnlich, jedoch handelt es sich hier um eine symmetrische Ausführung, bei welcher symmetrisch zu einer Ebene E in welcher die Rotationsachse R liegt und welche normal zur Wirkungsrichtung der Rückstellkraft F_{R} ist, jeweils ein weiteres Kopplungselement 30 nebst korrespondierendem Federelement 50 und Umfangsflächenabschnitt 40 angeordnet ist. Zusätzlich hierzu ist auch der Oberflächenverlauf der Umfangsflächenabschnitte 40 symmetrisch zur Ebene E ausgeführt, so dass auf zwei gegenüber liegenden Seiten des zweiten Kupplungselements 20 spiegelsymmetrisch kraftschlüssige Verbindungen mit Kopplungselementen 30 vorliegen. Dies hat den Vorteil, dass die Lagerung des zweiten Kupplungselements 20 am ersten Kupplungselement 10 im lastfreien Zustand kräftefrei ist und somit besonders materialschonend.

Durch den symmetrischen Aufbau ist die Vorrichtung gemäß Fig. 2 geeignet Drehspannungen im Falle von Rotationen sowohl im als auch gegen den Uhrzeigersinn aufzunehmen und abzugeben. Diese Ausführungsform ist somit universell anwendbar in Fällen, in denen Torsionsspannungen an einem Achsabschnitt in beiden Rotationsrichtungen auftreten können. Das Wirkungsprinzip für eine Rotation entgegen dem Uhrzeigersinn entspräche dabei dem zuvor unter Bezugnahme auf Fig. 9 beschriebenen, jedoch hinsichtlich der angegebenen Bewegungsrichtungen invertiert.

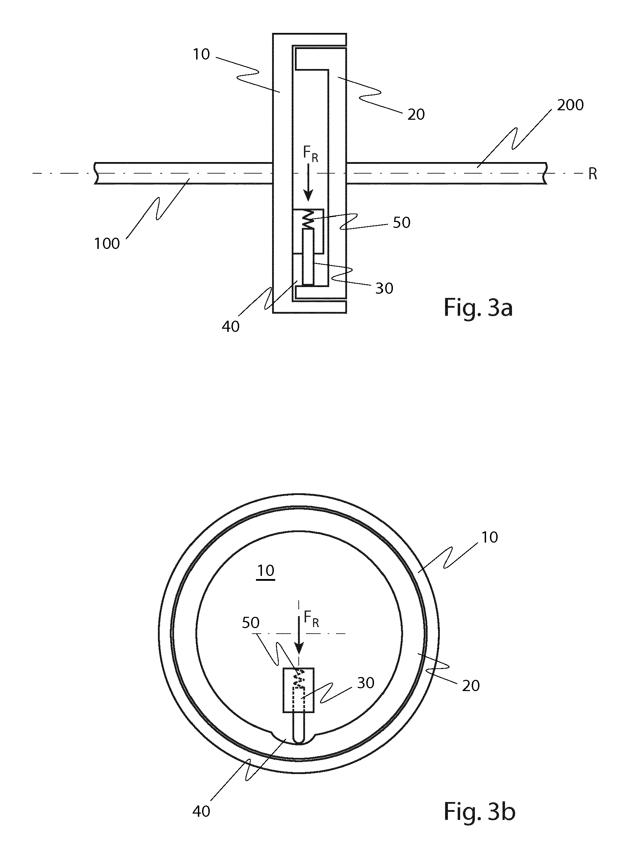

Fig. 3 zeigt schematisch den Aufbau einer dritten, geschlossenen Ausführungsform der Erfindung, wobei Fig. 3a eine schematische Schnittansicht und Fig. 3b eine schematische Draufsicht auf die erfindungsgemäße Vorrichtung in Richtung der Rotationsachse R zeigt. In Fig. 3a ist wiederum erkennbar, dass ein erstes, antriebsseitiges Kupplungselement 10, welches topfförmig ausgeführt ist, mit einer Antriebsachse 100 verbunden ist und ein zweites, abtriebsseitiges Kupplungselement 20, welches ebenfalls topfförmig ausgeführt ist, mit einer Abtriebsachse 200. Erstes Kupplungselement 10 und zweites Kupplungselement 20 sind dabei wie im Falle der ersten Ausführungsform der Erfindung um die Rotationsachse R drehbar gelagert, jedoch getrennt voneinander, so dass zumindest geringfügige Verdrehungen der beiden Kupplungselemente zueinander möglich sind. Demgemäß ist in Fig. 3a erkennbar, dass das zweite Kupplungselement 20, welches geringeren Außendurchmesser aufweist, als der Innendurchmesser der ersten Kupplungselements 10, nach der Art einer Trommel drehbar innerhalb des topfförmigen ersten Kupplungselements 10 aufgenommen ist. Darüber hinaus besteht die Möglichkeit, auch bei dieser Ausführungsform eine weitere, zentrische Lagerung, beispielsweise vermittels eines Lagerzapfens, vorzusehen, so dass erstes und zweites Kupplungselement 10, 20 zueinander zentriert gehalten und drehbar gelagert sind.

Das erste Kupplungselement 10 weißt eine innenliegende Halterungs- und Führungseinrichtung auf, mit der ein Kopplungselement 30 in Umfangsrichtung ortsfest an dieser bzw. dessen innenliegenden Zylinderboden gehalten ist, wobei das Kopplungselement 30 in bezüglich der Rotationsachse R radialer Richtung verschiebbar ist und zwar gegen eine Rückstellkraft F_{R}, welche ebenfalls im wesentlichen in radialer Richtung wirkt. Die Rückstellkraft wird durch ein Federelement 50 erzeugt, welches auf das Kopplungselement 30 wirkt. Zusätzlich zur Rückstellkraft F_{R} übt das Federelement 50 außerdem eine Kraft auf das Kopplungselement 30 aus, mit der dieses radial nach außen, also von der Rotationsachse R weg weisend gegen die Innenumfangsfläche das zweite Kupplungselement 20 gedrückt wird, und zwar in einem Umfangsflächenabschnitt 40 der, wie aus Fig. 3b ersichtlich ist, als konkave Ausnehmung des Innenumfangs des zweiten Kupplungselements 20 bzw. dessen Zylinderinnenwand ausgebildet ist. Wie ebenfalls aus Fig. 3b ersichtlich ist weist das Kopplungselement 30 im Bereich des Kontaktbereichs mit dem zweiten Kupplungselement 20 eine abgerundete Spitze auf, welche eine stärkere Krümmung aufweist, als eine Krümmung des konkaven Bereichs des Umfangsflächenabschnitts 40.

In Fig. 3b ist erkennbar, dass der konkave Oberflächenverlauf des Umfangsflächenabschnitts 40 ebenso wie im Fall der ersten Ausführungsform asymmetrisch ausgebildet ist, also zu einem Rand hin (vorliegend der rechte Randbereich) mit einer stärkeren Krümmung 41 ausgeführt ist, als zum anderen.

Bei einer Rotation des ersten Kupplungselements 10 gegen den Uhrzeigersinn wird durch die kraftschlüssige Verbindung des Kopplungselements 30 mit dem zweiten Kupplungselement 20 im lastfreien Zustand, also wenn kein entgegen der Rotation wirkendes Drehmoment am zweiten Kupplungselement 20 wirkt, dieses mitgenommen und führt somit eine der Rotation des ersten Kupplungselements 10 entsprechende Rotation aus. Erstes Kupplungselement 10 und zweites Kupplungselement 20 befinden sich hierbei im Gleichlauf. Beim Auftreten eines verzögernden Drehmoments (also einer Last) auf das zweite Kupplungselement 20, kommt es zu einem Vorauseilen des ersten Kupplungselementes 10 bezüglich des zweiten Kupplungselementes 20 um eine Winkeldifferenz, wodurch es analog zu dem in Bezug auf die erste Ausführungsform beschriebenen Verhältnissen zu einer Verschiebung des Kontaktbereichs zwischen Kopplungselement 30 und Umfangsflächenabschnitt 40 kommt. Hierdurch entsteht wiederum vermittels der Rückstellkraft F_{R} ein nachstellendes Drehmoment auf das zweite Kupplungselement 20, was für den Fall einer Entlastung, also eines Wegfalls des Verzögerungsmomentes zu einer Rückstellung des ersten Kupplungselementes 10 bezüglich des zweiten Kupplungselementes 20 führt.

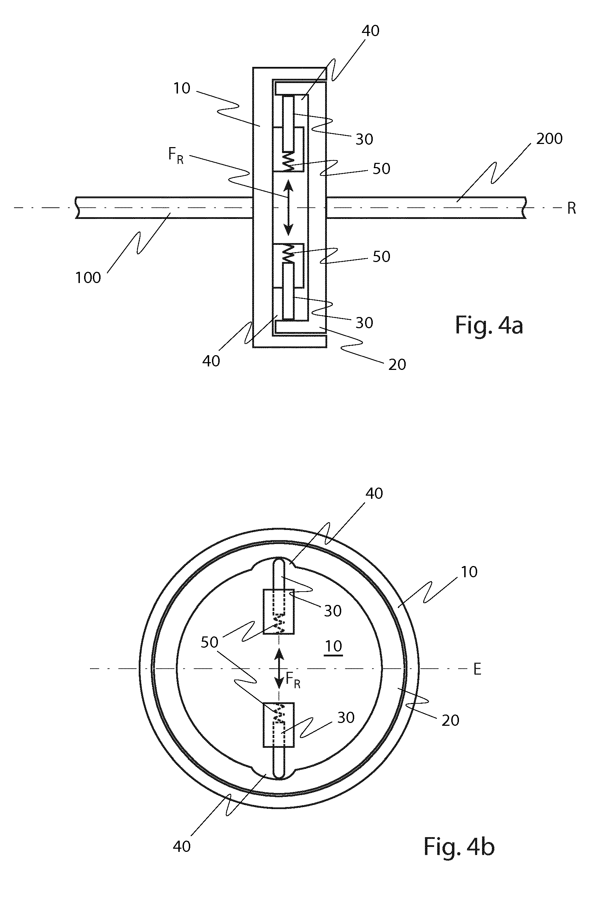

Fig. 4 zeigt schematisch den Aufbau einer vierten, geschlossenen Ausführungsform der Erfindung, wobei Fig. 4a eine schematische Schnittansicht und Fig. 4b eine schematische Draufsicht auf die erfindungsgemäße Vorrichtung in Richtung der Rotationsachse R zeigt. Die in Fig. 4 gezeigte Vorrichtung ist der dritten Ausführungsform gemäß Fig. 3 grundsätzlich ähnlich, jedoch handelt es sich hier wiederum um eine symmetrische Ausführung, bei welcher symmetrisch zur Ebene E in welcher die Rotationsachse R liegt und welche normal zur Wirkungsrichtung der Rückstellkraft F_{R} ist, jeweils ein weiteres Kopplungselement 30 nebst korrespondierendem Federelement 50 und Umfangsflächenabschnitt 40 angeordnet ist. Zusätzlich hierzu ist auch der Oberflächenverlauf der Umfangsflächenabschnitte 40 symmetrisch zur Ebene E ausgeführt, so dass auf zwei gegenüber liegenden Seiten des zweiten Kupplungselements 20 spiegelsymmetrisch kraftschlüssige Verbindungen mit Kopplungselementen 30 vorliegen. Dies hat wiederum den Vorteil, dass auch im Falle der geschlossenen Ausführung der Erfindung die Lagerung des zweiten Kupplungselements 20 am bzw. innerhalb des ersten Kupplungselements 10 im lastfreien Zustand kräftefrei ist und somit besonders materialschonend.

Auch im Falle der vierten Ausführungsform ist durch den symmetrischen Aufbau sicher gestellt, dass Drehspannungen im Falle von Rotationen sowohl im als auch gegen den Uhrzeigersinn aufgenommen und abgegeben werden können so dass die Vorrichtung universell anwendbar für Fälle ist, in denen Torsionsspannungen an einem Achsabschnitt in beiden Rotationsrichtungen auftreten können. Die geschlossene Ausführung der erfindungsgemäßen Vorrichtung hat dabei den Vorteil einer vereinfachten Montage, insbesondere bei klein dimensionierten Ausführungen der Vorrichtung, und, durch die Einhausung der beweglichen Teile der Vorrichtung, einer besonders hohen Betriebssicherheit und Zuverlässigkeit.

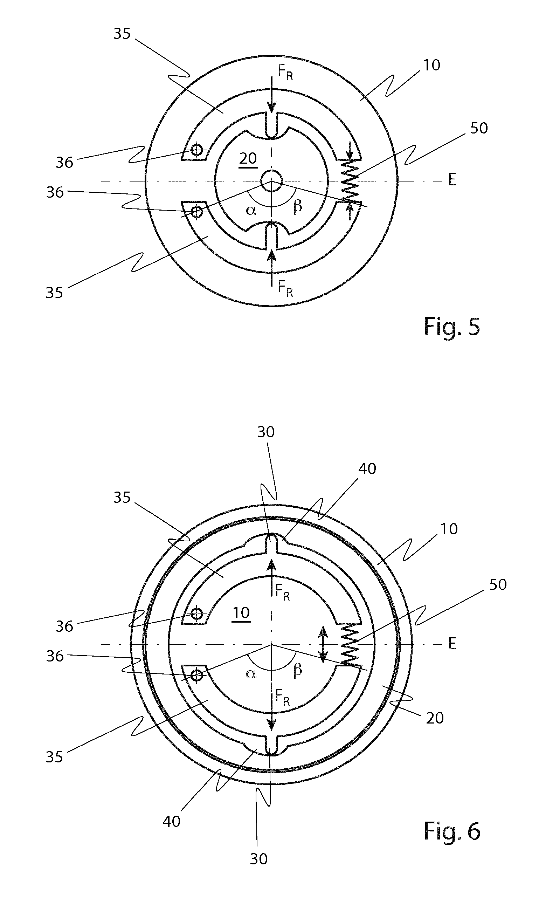

Die Figuren 5 und 6 zeigen weitere, komplementäre Ausführungsformen der vorliegenden Erfindung, also offenes bzw. geschlossenes System, welche im Wesentlichen auf den oben stehenden Wirkungsprinzipien wie vorstehend mit Bezug auf die Figuren 1 bis 4 und 9 beschrieben, beruhen. Demgegenüber weisen die Ausführungsformen gemäß den Figuren 5 und 6 jedoch zwei symmetrisch angeordnete Hebel 35 auf, an welchen die Kopplungselemente 30 angebracht sind, bzw. mit denen die Kopplungselemente 30 einstückig verbunden sind.

Das Hebellager 36 ist am ersten Kupplungselement um einen vorgegebenen ersten Winkel α bezüglich der Wirkungslinie der Rückstellkraft F_{R} versetzt angeordnet, wobei der Hebel 35 um das Hebellager 36 herum schwenkbar ausgeführt ist. Zudem greift, wie in Fig. 5 und 6 gezeigt ist, das Federelement 50, welches eine Zug- bzw. Druckkraft auf die Hebel 35 ausübt, an einem Punkt am Hebel an der um einen vorgegebenen zweiten Winkel β bezüglich der Wirkungslinie der Rückstellkraft F_{R} versetzt ist. Die beiden symmetrisch angeordneten Hebel 35 sind durch das Federelement 50 gegeneinander verspannt.

Bei dieser Ausführungsform erfolgt durch die Hebelverhältnisse am Hebel 35, welche neben der konkreten Formgebung und Schenkellängen auch durch den ersten und zweiten Winkel α, β maßgeblich beeinflusst werden eine Übersetzung der durch das Federelement 50 erzeugten Kraft, insbesondere der Rückstellkraft F_{R} sowie der Kraft zur Herstellung des Kraftschlusses zwischen Kopplungselementen 30 und Umfangsflächenabschnitten 40. Dies erlaubt eine anwendungsspezifische Auslegung sowohl der gesamten Baugröße der erfindungsgemäßen Vorrichtung als auch des Federelements 50 hinsichtlich Federkonstanten und insbesondere -material. Darüber hinaus kann durch den Aufbau der erfindungsgemäßen Vorrichtung ein Montagevorteil erzielt werden, da trotz symmetrischer Ausführung lediglich ein Federelement 50 zum Einsatz kommt.

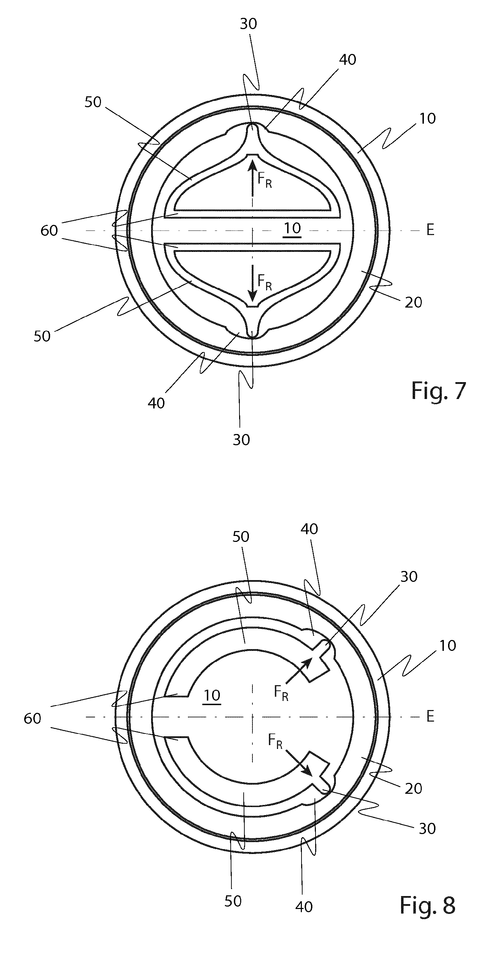

Fig. 7 zeigt eine weitere, geschlossene Ausführungsform der vorliegenden Erfindung, welche eine gemäß dem zuvor erläuterten Wirkungsprinzipien der Erfindung eine Kopplung zwischen einem ersten Kupplungselement 10 und einem zweiten Kupplungselement 20 bereit stellt. Zur Vermeidung von Wiederholungen wird hinsichtlich des Wirkungsmechanismus beim Aufbau bzw. der Abgabe von Drehspannungen auf das zuvor gesagte verwiesen, was vorliegend entsprechend anwendbar ist.

Anders als im Falle der in Fig. 4 gezeigten Ausführungsform der Erfindung erfolgt jedoch die Herstellung des Kraftschlusses zwischen Kopplungselement 30 und Umfangsflächenabschnitt 40 sowie der Aufbau der Rückstellkraft F_{R} durch ein Federelement 50, welches vorliegend ähnlich einem Blattfederelement ausgeführt ist, und welches aus Metall oder Kunststoff gefertigt ist. Die Federelemente 50 sind dabei an ihrer Basis 60 am ersten Kupplungselement 10 befestigt, so dass hierdurch eine Übertragung von Drehmoment von dem ersten Kupplungselement 10 auf die Federelemente 50 und damit über die Kopplungselemente 30, welches mit dem zweiten Kupplungselement 20 in einer kraftschlüssigen Verbindung stehen auf das zweite Kupplungselement.

Besonders bevorzugt ist die Basis 60 des bzw. der Federelemente 50 mit dem ersten Kupplungselement 10 und dem Kopplungselement 30 stoffschlüssig und insbesondere einstückig ausgeführt, beispielsweise im Rahmen der Herstellung des ersten Kupplungselementes 10 mittels eines Spritzgussverfahrens, in welchem gleichzeitig das Anspritzen des Federelementes 50 am ersten Kupplungselement 10 erfolgt. Die Arme des Federelementes 50 sind demgegenüber beweglich bezüglich es ersten Kupplungselements 10 ausgeführt, so dass eine Bewegung des hieran einstückig angeordneten Kopplungselementes 30 in radialer Richtung gegen eine Rückstellkraft F_{R} ermöglicht wird. Dabei kann die Federwirkung einerseits durch eine Elastizität der Arme des Federelements 50 erzielt werden, andererseits aber auch durch ein innerhalb des durch die Arme und die Basis aufgespannten Raumes angeordnetes Metallfederelement oder aber ein Polymerkissen, wie beispielsweise ein Silikonkissen oder dergleichen.

Fig. 8 zeigt schließlich eine weitere Ausführungsform der vorliegenden Erfindung, bei welchem die Hebel selbst als elastische Federelemente 50 ausgeführt sind. Auch in diesem Fall weisen die Federelemente eine Basis 60 auf, welche mit dem ersten Kupplungselement 10 fest, bevorzugt einstückig oder durch einen Stoffschluss verbunden ist, die Arme der Hebel jedoch bezüglich des ersten Kupplungselements 10 beweglich sind und somit elastische Hebelarme bilden. Bei dieser Ausführungsform ist zudem erkennbar, dass die Umfangsflächenabschnitte 40 und gleichermaßen die Federelemente 50 zwar bezüglich der Ebene E symmetrisch angeordnet sind, jedoch nicht bezüglich der Rotationsachse R. Alternative kann allerdings auch eine bezüglich der Rotationsachse R symmetrische Anordnung der Federelemente 50 vorgesehen sein - nicht gezeigt - welche dann mit hierzu korrespondierenden Umfangsflächenabschnitten 40 in einer kraftschlüssigen Verbindung stehen. Wesentlich bei diesen Ausführungsformen ist ebenso wie im Falle der Fig. 7 die Möglichkeit der einstückigen Fertigung der Vorrichtung mittels eine Spritzgussverfahrens, bei welchem das erste Kupplungselement 10, Federelement 50 und Kopplungselement 30 einstückig und bevorzugt in einem Spritzgang gefertigt werden können.

In Bezug auf sämtliche im Rahmen der detaillierten Beschreibung der anliegenden Zeichnungen Bezugnahmen auf das Federelement 50, welches in den Zeichnungen zum Teil als Spiralfederelement dargestellt ist, wird angemerkt, dass hier gleichermaßen metallische Federelemente, Polymerkissen oder -bänder, Luftfedern oder dergleichen zum Einsatz kommen können und die gewählte Darstellungsart innerhalb der Zeichnungen nicht als Festlegung auf entsprechende Spiralfederelemente zu verstehen ist.

Die im Rahmen der detaillierten Beschreibung der anliegenden Zeichnungen gezeigten Oberflächenverläufe des Umfangsflächenabschnitts 40 sind durchweg asymmetrisch und weisen einen sich als vorteilhaft herausgestellten Oberflächenverlauf auf. Dennoch sei an dieser Stelle angemerkt, dass ganz allgemein zum Einen bei der Ausführung der vorliegenden Erfindung gleichermaßen symmetrische Oberflächenverläufe der Umfangsflächenabschnitte zum Einsatz kommen können und/oder auch sehr geringe Konkavitäten, also sehr große Krümmungsradien. Die konkrete Wahl des Oberflächenverlaufs ist spezifisch für den jeweiligen Anwendungsfall und bedarf keiner Asymmetrie, insbesondere dann nicht, wenn große Krümmungsradien der Konkavität gewählt werden bei vorzugsweise gleichzeitig großen Rückstellkräften und/oder Differenzwinkeln.

Schließlich sei zudem auch noch erwähnt, dass Ausführungsformen der vorliegenden Erfindung denkbar sind, bei welchen eine Vielzahl von Kopplungselementen und hiermit in kraftschlüssiger Verbindung stehenden Umfangsflächenabschnitten um die Rotationsachse herum angeordnet sind, beispielsweise 4 oder 6 Kopplungselemente bzw. korrespondierende Umfangsflächenabschnitte, welche dann bevorzugt symmetrisch angeordnet sind. Darüber hinaus sind auch Ausführungsformen denkbar, bei welchen an unterschiedlichen Stellen eines Hebels Kopplungselemente angeordnet sind, auf welche dann durch die Hebelverhältnisse unterschiedliche Kräfte, insbesondere Rückstellkräfte vermittels des Federelementes wirken.

## Patentansprüche

1. Vorrichtung zur Übertragung von Drehmoment mit:
einem ersten, antriebsseitigen Kupplungselement (10) und einem zweiten, abtriebsseitigen Kupplungselement (20), wobei das erste und das zweite Kupplungselement (10, 20) um eine gemeinsame Rotationsachse (R) voneinander getrennt drehbar gelagert sind,
wenigstens ein Kopplungselement (30) in Rotationsrichtung ortsfest mit dem ersten Kupplungselement (10) verbunden ist und in bezüglich der Rotationsachse (R) im Wesentlichen radialer Richtung gegen eine Rückstellkraft (F_{R}) beweglich ist, wobei
wenigstens ein zu dem wenigstens einen Kopplungselement (30) korrespondierender Umfangsflächenabschnitt (40) in Form einer Ausnehmung mit zumindest teilweise konkavem Oberflächenverlauf am Umfang des zweiten Kupplungselementes (20) vorgesehen ist, und wobei
das wenigstens eine Kopplungselement (30) in einem Kontaktbereich mit dem korrespondierenden Umfangsflächenabschnitt (40) in einer kraftschlüssigen Verbindung steht,
**dadurch gekennzeichnet, dass**
der konkave Oberflächenverlauf des wenigstens einen Umfangsflächenabschnitts (40) wenigstens einen Bereich (41) stärkerer Krümmung aufweist, wobei
Übergänge zwischen Bereichen unterschiedlicher Krümmungen vorzugsweise klothoidenförmig ausgebildet sind.

2. Vorrichtung gemäß Anspruch 1, **dadurch gekennzeichnet, dass** der wenigstens eine Umfangsflächenabschnitt (40) an einem Außenumfang des zweiten Kupplungselements (20) vorgesehen ist und die Rückstellkraft (F_{R}) bezüglich der Rotationsachse (R) im Wesentlichen radial nach innen gerichtet ist oder dass der wenigstens eine Umfangsflächenabschnitt (40) an einem Innenumfang des zweiten Kupplungselements (20) vorgesehen ist und die Rückstellkraft (F_{R}) bezüglich der Rotationsachse (R) im Wesentlichen radial nach außen gerichtet ist, und dass der wenigstens eine Umfangsflächenabschnitt (40) bezüglich des Kopplungselements (30) bevorzugt radial innenliegend bzw. radial außenliegend angeordnet ist.

3. Vorrichtung gemäß einem der vorhergehenden Ansprüche, **dadurch gekennzeichnet, dass** das wenigstens eine Kopplungselement (30) im Bereich des Kontaktbereichs konvex ausgeführt ist und vorzugweise eine Krümmung aufweist, die stärker ist, als die Krümmung des korrespondierenden Umfangsflächenabschnitts (40), und der Kontaktbereich vorzugsweise entgegen einer Gleit- oder Rollreibung entlang des konkaven Oberflächenverlaufs des Umfangsflächenabschnitts (40) verschiebbar ist.

4. Vorrichtung gemäß einem der vorhergehenden Ansprüche, **dadurch gekennzeichnet, dass** eine Winkeldifferenz (γ) in Rotationsrichtung zwischen erstem und zweitem Kupplungselement (10, 20) zu einer Verschiebung des Kontaktbereichs entlang des konkaven Oberflächenverlaufs des Umfangsflächenabschnitts (40) führt, wodurch vermittels der Rückstellkraft (F_{R}) ein die Winkeldifferenz (γ) rückstellendes Drehmoment (M) auf das zweite Kupplungselement (20) wirkt.

5. Vorrichtung gemäß einem der vorhergehenden Ansprüche, **dadurch gekennzeichnet, dass** der Bereich (41) stärkerer Krümmung am Umfangsflächenabschnitt (40) randseitig angeordnet ist.

6. Vorrichtung gemäß Anspruch 5, **dadurch gekennzeichnet, dass** der wenigstens einen Bereich (41) stärkerer Krümmung am in Rotationsrichtung vorne liegenden Rand des konkaven Oberflächenverlaufs des wenigstens einen Umfangsflächenabschnitts (40) angeordnet ist.

7. Vorrichtung gemäß einem der vorhergehenden Ansprüche, **dadurch gekennzeichnet, dass** die kraftschlüssige Verbindung und die Rückstellkraft durch wenigstens ein auf das Kopplungselement (30) wirkendes Federelement (50) hergestellt bzw. gebildet wird, wobei das Federelement aus einer Gruppe ausgewählt ist, die Druck- oder Zugfederelemente, insbesondere elastische Kissen oder Bänder, Polymerkissen oder -bänder, Spiralfedern, Blattfedern, elastische Hebelarme, sämtlich aus Kunststoff oder Metall bestehend, Luftfederelemente sowie Kombinationen hiervon enthält.

8. Vorrichtung gemäß einem der vorhergehenden Ansprüche, **dadurch gekennzeichnet, dass** das Kopplungselement (30) an wenigstens einem Hebel (35) angeordnet ist, wobei das Hebellager (36) am ersten Kupplungselement (10) um einen vorgegebenen ersten Winkel (α) in Rotationsrichtung bezüglich der Wirkungslinie der Rückstellkraft (F_{R}) versetzt angeordnet ist und/oder das Federelement (50) an einem Punkt auf den Hebel wirkt der um einen vorgegebenen zweiten Winkel (β) in Rotationsrichtung bezüglich der Wirkungslinie der Rückstellkraft (F_{R}) versetzt ist.

9. Vorrichtung gemäß einem der vorhergehenden Ansprüche, **dadurch gekennzeichnet, dass** zwei Hebel (35) und/oder Kopplungselemente (30) und, hierzu korrespondierend, zwei Umfangsflächenabschnitte (40) vorgesehen sind, wobei vorzugsweise erster Hebel bzw. erstes Kopplungselement und hierzu korrespondierender erster Umfangflächenabschnitt und zweiter Hebel bzw. zweites Kopplungselement und hierzu korrespondierender zweiter Umfangflächenabschnitt im Wesentlichen symmetrisch bezüglich der Rotationsachse (R) oder einer Ebene (E), in welcher die Rotationsachse (R) liegt angeordnet sind.

10. Vorrichtung gemäß Anspruch 9, **dadurch gekennzeichnet, dass** das Federelement (50) die zwei Hebel (35) gegeneinander verspannt.

11. Vorrichtung gemäß Anspruch 9, **dadurch gekennzeichnet, dass** der Oberflächenverlauf des ersten Umfangsflächenabschnitts und der Oberflächenverlauf des zweiten Umfangsflächenabschnitts bezüglich einer Ebene (E) in welcher die Rotationsachse (R) liegt im Wesentlichen symmetrisch ist.

12. Vorrichtung gemäß einem der vorhergehenden Ansprüche, **dadurch gekennzeichnet, dass** das erste Kupplungselement (10) und/oder das zweite Kupplungselement (20) mit einer Antriebsachse (100) bzw. einer Abtriebsachse (200) im Wesentlichen drehfest verbunden sind, wobei die Art der Verbindung aus einer Gruppe ausgewählt ist, die stoffschlüssige Verbindungen, insbesondere eine einstückige Ausführung von erstem Kupplungselement und Antriebsachse bzw. zweitem Kupplungselement und Abtriebsachse, kraft- und/oder formschlüssige Verbindungen, insbesondere Steckverbindungen, Klemmverbindungen, Schnappverbindungen, sämtliche vorzugsweise lösbar, enthält.

13. Vorrichtung gemäß einem der vorhergehenden Ansprüche, **dadurch gekennzeichnet, dass** erstes Kupplungselement (10), Kopplungselement (30), Hebel (35) und/oder Federelement (50) einstückig miteinander verbunden sind.

14. Vorrichtung gemäß einem der vorhergehenden Ansprüche, **dadurch gekennzeichnet, dass** erstes Kupplungselement (10), zweites Kupplungselement (20), Kopplungselement (30), Hebel (35) und/oder Federelement (50) aus Kunststoff gefertigt sind.

## Claims

1. A device for transferring torque comprising:
a first, drive-side clutch element (10) and a second, driven-side clutch element (20), the first and second clutch elements (10, 20) being rotatably supported, separately from one another, about a common axis of rotation (R),
at least one coupling element (30) being stationarily connected to the first clutch element (10) in the direction of rotation and being movable against a restoring force (F_{R}) in a direction substantially radial relative to the axis of rotation (R), wherein
there is provided on the circumference of the second clutch element (20) at least one circumferential surface portion (40) which corresponds to the at least one coupling element (30), in the form of a recess having an at least partially concave surface shape, and wherein
the at least one coupling element (30) is in a friction-locked connection with the corresponding circumferential surface portion (40) in a contact region,
**characterized in that**
the concave surface shape of the at least one circumferential surface portion (40) has at least one region (41) of stronger curvature, wherein
transitions between regions of different curvature are formed in a clothoid shape.

2. The device of claim 1, **characterized in that** the at least one circumferential surface portion (40) is provided on an outer circumference of the second clutch element (20) and the restoring force (F_{R}) is directed substantially radially inward relative to the axis of rotation (R), orthatthe at least one circumferential surface portion (40) Is provided on an inner circumference of the second clutch element (20) and the restoring force (F_{R}) is directed substantially radially outward relative to the axis of rotation (R), and that the at least one circumferential surface portion (40) is preferably located radially inward or radially outward relative to the coupling element (30), respectively.

3. The device of any preceding claim, **characterized in that** the at least one coupling element (30) in the region of the contact region has a convex configuration and preferably has a curvature which is stronger than the curvature of the corresponding circumferential surface portion (40), and the contact region can preferably be shifted against a sliding or rolling friction along the concave surface shape of the circumferential surface portion (40).

4. The device of any preceding claim, **characterized in that** an angular difference (γ) in the direction of rotation between the first and second clutch elements (10, 20) results in a shifting of the contact region along the concave surface shape of the circumferential surface portion (40), so that a torque (M) restoring the angular difference (γ) acts on the second clutch element (20) by means of the restoring force (F_{R}).

5. The device of any preceding claim, **characterized in that** the region (41) of stronger curvature is located at the edge on the circumferential surface portion (40).

6. The device of claim 5, **characterized in that** the at least one region (41) of stronger curvature is located at the front edge, in the direction of rotation, of the concave surface shape of the at least one circumferential surface portion (40).

7. The device of any preceding claim, **characterized in that** the friction-locked connection and the restoring force are formed and generated, respectively, by at least one spring element (50) acting on the coupling element (30), the spring element being selected from a group comprising pressure-spring or tension-spring elements, in particular elastic cushIons or bands, polymer cushions or bands, spiral springs, leaf springs, elastic lever arms, all made of plastics or metal, air-spring elements, and combinations thereof.

8. The device of any preceding claim, **characterized in that** the coupling element (30) is located on at least one lever (35), the lever pivot (36) being located on the first clutch element (10), displaced in the direction of rotation by a predetermined first angle (α) relative to the line of action of the restoring force (F_{R}), and/orthe spring element (50) acts on the lever at a point which is displaced in the direction of rotation by a predetermined second angle (β) relative to the line of action of the restoring force (F_{R}).

9. The device of any preceding claim, **characterized in that** there are provided two levers (35) and/or coupling elements (30) and, corresponding thereto, two circumferential surface portions (40), wherein preferably the first lever and first coupling element, respectively, and the first circumferential surface portion corresponding thereto, and the second lever and second coupling element, respectively, and the second circumferential surface portion corresponding thereto are located substantially symmetrically relative to the axis of rotation (R) or to a plane (E) In which the axis of rotation (R) lies.

10. The device of claim 9, **characterized In that** the spring element (50) tensions the two levers (35) against one another.

11. The device of claim 9, **characterized in that** the surface shape of the first circumferential surface portion and the surface shape of the second circumferential surface portion are substantially symmetric relative to a plane (E) in which the axis of rotation (R) lies.

12. The device of any preceding claim, **characterized in that** the first clutch element (10) and/or the second clutch element (20) are connected in a substantially torsionally resistant manner to a drive axle (100) and a driven axle (200), respectively, the type of connection being selected from a group comprising connections by adhesive force, in particular an Integral configuration of the first clutch element and drive axle and the second clutch element and driven axle, respectively, friction-locked and/or form-fit connections, in particular plug-in connections, clamp connections, snap connections, all of which are preferably disconnectable.

13. The device of any preceding claim, **characterized in that** the first clutch element (10), coupling element (30), lever (35) and/or spring element (50) are integrally connected.

14. The device of any preceding claim, **characterized in that** the first clutch element (10), second clutch element (20), coupling element (30), lever (35) and/or spring element (50) are made of plastics.

## Revendications

1. Dispositif pour le transfert de couple avec :
un premier élément d'accouplement côté entraînement (10), et un second élément d'accouplement côté sortie (20), le premier et le second éléments d'accouplement (10, 20) étant logés autour d'un axe de rotation (R) commun, séparément l'un de l'autre, de façon rotative,
au moins un élément de couplage (30) étant relié de façon fixe dans le sens de rotation avec le premier élément d'accouplement (10) et étant mobile en direction essentiellement axiale par rapport à l'axe de rotation (R) contre une force de rappel (F_{R}),
au moins une section de surface périphérique (40) correspondant à au moins l'un des éléments d'accouplement (30) en forme d'entaille avec un tracé de surface au moins partiellement concave sur la circonférence du second élément d'accouplement (20) étant prévue, et
au moins un élément de couplage (30) étant lié par force dans une zone de contact avec la section de surface périphérique correspondante (40),
**caractérisé en ce que**
le tracé de surface concave d'au moins la section de surface périphérique (40) présente au moins une zone (41) à courbure plus prononcée,
les transitions entre les zones de courbures différentes étant conçues selon une forme clothoïde.

2. Dispositif selon la revendication 1, **caractérisé en ce qu'**au moins une section de surface périphérique (40) est prévue sur une circonférence externe du second élément d'accouplement (20) et la force de rappel (F_{R}) est essentiellement dirigée radialement vers l'intérieur par rapport à l'axe de rotation (R) ou **en ce qu'**au moins la section de surface périphérique (40) est prévue sur une circonférence interne du second élément d'accouplement (20) et la force de rappel (F_{R}) est essentiellement dirigée radialement vers l'extérieur par rapport à l'axe de rotation (R), et **en ce qu'**au moins la section de surface périphérique (40) est disposée de préférence radialement à l'intérieur ou radicalement à l'extérieur par rapport à l'élément de couplage (30).

3. Dispositif selon une quelconque des revendications précédentes, **caractérisé en ce qu'**au moins l'élément de couplage (30) est configuré de façon convexe dans le secteur de la zone de contact et présente de préférence une courbure qui est plus marquée que la courbure de la section de surface périphérique correspondance (40), et **en ce que** la zone de contact est de préférence mobile contre une friction de glissement ou de roulement le long du tracé de surface concave de la section de surface périphérique (40),

4. Dispositif selon une quelconque des revendications précédentes, **caractérisé en ce qu'**un décalage angulaire (γ) dans le sens de rotation entre le premier et le second éléments d'accouplement (10, 20) entraîne un décalage de la zone de contact le long du tracé de surface concave de la section de surface périphérique (40), par quoi au moyen de la force de rappel (F_{R}), un couple de rappel (M) du décalage angulaire (γ) agit sur le second élément d'accouplement (20).

5. Dispositif selon une quelconque des revendications précédentes, **caractérisé en ce que** la zone (41) de courbure plus prononcée est disposée en bordure sur la section de surface périphérique (40).

6. Dispositif selon la revendication 5, caractérisé en cc qu'au moins la zone (41) de courbure plus prononcée est disposée sur la bordure avant dans le sens de rotation du tracé de surface concave d'au moins la section de surface périphérique (40).

7. Dispositif selon une quelconque des revendications précédentes, **caractérisé en ce que** la liaison par force et la force de rappel sont créées ou formées par un élément de ressort (50) agissant sur au moins l'élément de couplage (30), l'élément de ressort étant sélectionné à partir d'un groupe intégrant des élément de ressort de pression ou de rappel, en particulier des coussins ou des rubans élastiques, des coussins ou des rubans en polymère, des ressorts en spirale, des ressorts à lames, des bras de levier élastiques, tous fabriqués en plastique ou en métal, des éléments amortisseurs pneumatiques ainsi que des combinaisons de ceux-ci.

8. Dispositif selon une quelconque des revendications précédentes, **caractérisé en ce que** l'élément de couplage (30) est disposé sur un moins un levier (35), le palier du levier (36) étant disposé sur le premier élément d'accouplement (10) avec un décalage d'un premier angle donné (α) dans le sens de rotation par rapport à la ligne d'action de la force de rappel (F_{R}) et/ou l'élément de ressort (50) agissant sur un point sur le levier, qui est décalé d'un second angle prescrit (β) dans le sens de rotation par rapport à la ligne d'action de la force de rappel (F_{R}).

9. Dispositif selon une des revendications précédentes, **caractérisé en ce que** deux leviers (35) et/ou éléments de couplage (30) et deux sections de surface périphérique y correspondant (40) sont prévus, de préférence le premier levier et/ou le premier élément de couplage et la première section de surface périphérique y correspondant et le second levier et/ou le second élément de couplage et la seconde section de surface périphérique y correspondant étant disposés de façon essentiellement symétrique par rapport à l'axe de rotation (R) ou à un plan (E), sur lequel se trouve disposé l'axe de rotation (R).

10. Dispositif selon la revendication 9, **caractérisé en ce que** l'élément de ressort (50) tend les deux leviers (35) l'un contre l'autre.

11. Dispositif selon la revendication 9, **caractérisé en ce que** le tracé de surface de la première section de surface périphérique et le tracé de surface de la seconde section de surface périphérique sont disposés de façon essentiellement symétrique par rapport à un plan (E) dans lequel se situe l'axe de rotation (R).

12. Dispositif selon une quelconque des revendications précédentes, **caractérisé en ce que** le premier élément de couplage (10) et/ou le second élément de couplage (20) est relié à un axe d'entraînement (100) et/ou un axe de sortie (200) de façon essentiellement solidaire en rotation, le type de liaison étant sélectionné à partir d'un groupe comportant des liaisons par adhésion de matières, notamment une conception monobloc du premier élément de couplage et de l'axe d'entraînement et/ou du second élément de couplage et de l'axe de sortie, des liaisons par force ou mécaniques, en particulier des connexions par fiche, des jonctions par serrage, des liaisons par encliquetage, toutes de préférence détachables.

13. Dispositif selon une quelconque des revendications précédentes, **caractérisé en ce que** le premier élément d'accouplement (10), l'élément de couplage (30), le levier (35) et/ou l'élément de ressort (50) sont reliés les uns avec les autres de façon monobloc.

14. Dispositif selon une quelconque des revendications précédentes, **caractérisé en ce que** le premier élément d'accouplement (10), le second élément d'accouplement (20), l'élément de couplage (30), le levier (35) et/ ou l'élément de ressort (50) sont fabriqués en matière plastique.
